# EUROPEAN PATENT SPECIFICATION

(11) **EP 0 187 281 B1**
(45) Date of publication and mention of the grant of the patent: **23.06.1993**
(21) Application number: 85115627.3
(22) Date of filing: 09.12.1985
(51) Int. Cl.: C08F 8/44

(54) **Novel carboxylate polymers and processes for their preparation and use**
Karboxylgruppenhaltige Polymere, Verfahren zu deren Herstellung und ihre Verwendung
Polymères carboxylés, leur procédé de préparation et leur application

(30) Priority: 07.01.1985 US 689212
(43) Date of publication of application: 16.07.1986
(73) Proprietor: RHONE-POULENC SPECIALTY CHEMICALS CO., New Jersey 08512-7500 (US)
(72) Inventor: Carioti, John Victor, Morristown, NJ 07960 (US); Jobbins, Richard McIntyre, Morristown, NJ 07960 (US)
(74) Representative: Brock, Peter William

(56) References cited:
- EP-A- 0 016 623
- DE-A- 2 043 613
- DE-B- 1 063 807
- FR-A- 2 134 968
- US-A- 2 843 573
- US-A- 4 390 659

## Description

This invention relates to cationic, water-soluble, polycarboxylate polymers and processes for their preparation. The polymers are useful for treatment of waste water to separate efficiently the waste from the water and for other purposes.

There is a high and increasing demand for high molecular weight, cationic polyelectrolytes for water treatment, especially for treatment of waste water. There are available certain such high molecular weight polyelectrolytes. For example, acrylic polymers have been modified by esterification to provide cationic polyelectrolyte polymers which are said to be useful for water treatment.

For example, in US-A-3730888, certain polymers of relatively high molecular weight which are tertiary amino hydroxyalkyl esters of carboxylic acid polymers, and corresponding acid addition salts. They can, for example, be prepaired by reacting sodium polyacrylates, with certain epoxyalkylamine compounds such as glycidyl ammonium quaternary salts, to convert some of the sodium acrylate groups into the corresponding ester groups.

Such products would contain repeating units of the formula 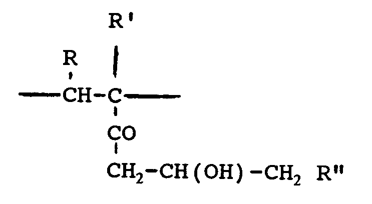
wherein R and R'' are each hydrogen, methyl or ethyl, and R'' represents various disubstituted amino groups. These compounds and their salts with acids are indicated to have utility as flocculants.

In previous processes, relatively low conversion of acrylate salt groups to ester groups has been realized. In an attempt to increase the conversion of acrylate groups, such as sodium acrylate groups, to ester groups, concentration of the acrylate polymer in the reaction mixture has been increased. This results in a highly viscous reaction mixture, especially as the reaction proceeds, which is difficult to stir. Also, following such previous processes using such high concentrations, the corresponding high concentrations of the epoxy compound has resulted in degradation of the epoxy compound by reaction with the anion of the reaction mixture to form, for example, the corresponding 1-halo-2-hydroxy compound, which has a much lower reactivity with the acrylate salt groups. This degradation reaction occurs at approximately neutral or acid pH values. Further, at alkaline pH values, the formation of the 1-halo-2-hydroxy by-product is reduced, but there is realized an unwanted hydrolysis of the desired acrylate ester groups. Also, by the previous processes, a less than desired amount of the acrylate groups has been converted to the hydroxyalkyl amine ester groups.

It is desired that the deficiencies of the prior art processes for esterification of the carboxylate groups of polymers and copolymers be avoided or minimized. Also, it is desired to provide more efficient carboxylate ester polymers to use in flocculation, filtration and other uses where water-solubility is required. It is further desired that the efficiencies of the process for making acrylate ester polymers be improved.

This invention provides a cationic, water-soluble, carboxylate polymer comprising the following polymeric units randomly distributed in the polymer chain:
A- 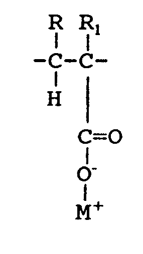
wherein R and R₁ are hydrogen, methyl or ethyl and M⁺ is a cation derived from a metal;
B- 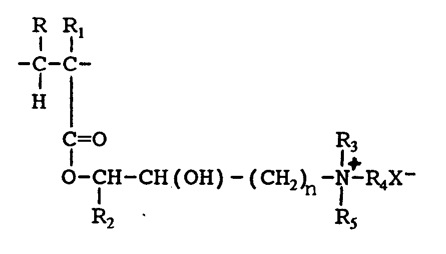
wherein R and R₁ are hydrogen, methyl or ethyl; R₃, R₄ and R₅ are alkyl groups having 1 to 8 carbon atoms, R₂ is selected from hydrogen and alkyl groups having 1 to 3 carbon atoms; "n" is an integer of 1 to 4; the total of "n" and the number of carbon atoms in R₂ not to exceed four; and X is an anion; the percentage of "B" units being from 50 to 90 mol percent, based on the total of "A" and "B" units, said polymer being obtainable by a process comprising esterification in aqueous medium at an elevated reaction temperature of a water-soluble carboxylate salt polymer having repeating units of the formula A and a molecular weight of 2000 to 20 million, with an epoxy alkyl ammonium salt of the following formula: 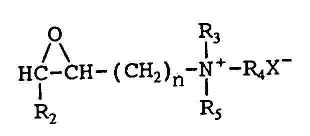
wherein X is an anion having a degradation rate against glycidyl trimethyl ammonium salt of up to 30, relative to water, measured in aqueous solution at 25°C and pH 6-7, with a 2 molar concentration of anion X and a 0.1 molar concentration of glycidyl trimethyl ammonium salt; and R₂, R₃, R₄ and R₅ have the meanings given above.

Preferably, R is hydrogen and R₁ is preferably hydrogen or methyl. Preferably, R₂ is hydrogen. Also, it is preferred that "n" is one. It is further preferred that R and R₁ are hydrogen. X is an anion, suitably nitrate, sulfate, sulfonate or perchlorate.

It is preferred that the mol percentage of B polymer units be greater than 80 mol percent and it is more preferred that the mol percentage of B polymer units be at least 85 mol percent, all based on the total mols of"A" and "B" units.

The water-soluble acrylate polymers may have an amount of acrylamide polymeric units or other polymeric units so long as they do not interfere with the water-solubility of the polymers and the desired flocculation or filtration or other intended uses.

Optimum results in the process of our invention are attained by the use of polymers of ethylenically unsaturated monocarboxylic acid salts such as polysodium acrylate. The acrylate or other carboxylate salt groups are esterified in accordance with the above formula B, from 50 to 90 mol percent, preferably from about 75 to 90 mol percent.

It has been found that a desired high esterification of the carboxylate salt groups of the polycarboxylate salt starting polymers is obtained (to provide B polymer units) by reaction with the appropriate epoxy alkyl tertiary ammonium quaternary salts, where selected salts are used which have a very low degradation reaction rate toward the epoxide groups of the quaternary salt compounds used on the esterification.

A process is provided to separate solids from water by adding to a water-solid combination a flocculating effective amount of the carboxylate polymers of this invention.

The presently most preferred B polymer unit is acryloxy-2-hydroxypropyltrimethyl ammonium salt. It is preferred that the mol percentage of B polymer units be greater than 80 mol percent and it is more preferred that the mol percentage of B polymer units be at least 85 mol percent, all based on the total mols of "A" and "B" units.

The copolymers of this invention are suitably made using a water-soluble carboxylate polymer by following the process of this invention. The water-soluble carboxylate polymers used have a molecular weight from 2,000, to 20 million, preferably 200,000 to twenty million, more preferably having a molecular weight of two to twenty million, and most preferably having a molecular weight of from five to fifteen million.

The water-soluble carboxylate polymers are desirably homopolymers, such as acrylate salt polymers, such as sodium polyacrylate. The sodium acrylate polymers can have other polymeric groups so long as they do not substantially interfere with the desired flocculation or filtration or other intended uses of the final esterfied polymers. For example, the water-soluble acrylate polymers may have an amount of acrylamide polymeric units such as up to 95 mol percent acrylamide polymeric units to 100-5 mol percent acrylate salt polymeric units, preferably 0-70 mol percent acrylamide to 30-100 mol percent acrylate salt groups.

The acrylate salt unit can be replaced in part or totally with one or more of other carboxylic acid salt units such as methacrylic acid, crotonic acid, ethacrylic acid, fumaric acid, maleic acid, and itaconic acid or copolymers containing carboxylate polymer units which are derived from any of the latter ethylenically unsaturated carboxylic acids. The comonomers which may be used in preparing the applicable copolymers of these ethylenically unsaturated carboxylic acids may include other ethylenically unsaturated monomers, for example, vinyl comonomers, such as acrylonitrile, acrylamide, methyl vinyl ether, ethyl vinyl ether, the lower alkyl esters of acrylic acid and methacrylic acid, hydroxypropyl acrylate, hydroxypropyl methacrylate, hydroxyethyl acrylate, hydroxyethyl methacrylate, vinyl acetate, and vinyl alcohol.

Presently preferred in the process of our invention are polymers of ethylenically unsaturated monocarboxylic acid salts such as polysodium acrylate.

The acrylate or other carboxylate salt groups are esterified in accordance with the above formula B, from 50 to 90 mol percent, preferably from 75 to 90 mol percent. The degree of conversion to esters of formula B depends on the intended use of the polymers of the invention, and on the amount of any other comonomers employed and other factors, so long as there is not interference with the water-solubility of the final polymers.

The polymers of the invention can be made by the process provided hereby. It has been found that a very high degree of esterification can be provided by esterifying the carboxylate salt polymers with epoxy alkyl tertiary amine compounds or their quaternary salts, such as preferably the glycidyltrialkylquaternary ammonium salts as defined. The quaternary salts have a formula as follows: 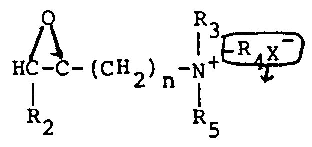
wherein X represents an anion which has low degradation reactivity against the epoxy group of the compound. R₂, R₃, R₄ and R₅ have the same definitions as set forth above.

The degradation reactivity of the anion X is determined in aqueous solution at about 25°C using a concentration of glycidyl trimethyl ammonium salt of 0.1 molar and a 2 molar concentration of the anion X being tested for degradation reaction rate. The pH of the aqueous solution is maintained at substantial neutrality (about pH 6-7). There is a slight degradation of activity of the epoxide group by water and that activity is taken as the standard and given the degradation reactivity rate of "1". The reactivity rates of some representative anions are given in the following table:

| Anion (X⁻) | Relative Reaction Rate Toward Glycidyl Trimethyl Ammonium Salt |
|---|---|
| Standard (H₂O) | 1 |
| Perchlorate | 1 |
| RSO₃ - Sulfonate | 5 |
| NO₃ - Nitrate | 5 |
| SO₄ - Sulfate | 30 |
| Chloride | 300 |

Preferable anions for the epoxy alkyl quaternary ammonium salts used include perchlorate, nitrate, sulfonate and sulfate, with perchlorate and nitrate salts presently being the most preferred.

Using the epoxy alkyl quaternary ammonium salts for the esterification, the water-soluble acrylate salt polymer is dissolved in water at relatively low concentrations. This permits efficient stirring during the esterification process. A concentration of carboxylic salt polymeric units of 0.05 to 3 molar is suitable, with 0.2 to 3 molar concentration being generally preferable, depending upon the molecular weight of the carboxylate polymer and the nature of the polymeric units.

The epoxy alkyl quaternary ammonium salt used will be in accordance with the above formula. The amount used will depend on the degree of esterification desired.

The reactor used preferably is closed and is equipped with an appropriate stirring mechanism. Preferably the reactor is equipped also with a pH monitoring means and a heating means. The reaction temperature ordinarily will be in the range of from 50°C to 100°C; generally speaking, a temperature of about 80°C provides good reaction rates and good conversions.

The produced polymer having carboxy-hydroxyalkyl quaternary ammonium salt polymeric units can be isolated from the reaction mixture as by precipitation using a suitable water miscible solvent or the water-soluble polymer product can be used directly in the form of the reaction mixture. The degree of esterification can be determined by infrared analysis, for example by FT-infrared analysis. The process of this invention enables a conversion of the carboxylate salt units of 75 to 90 mol percent, such as 80 to 90 mol percent.

The desired quaternary ammonium salts of the epoxyalkyltrialkylamine compounds used in the esterification process to provide the water-soluble polymers of this invention can be provided from the corresponding chlorohydroxy alkyl salt. For example, 3-chloro-2-hydroxypropyl trimethyl ammonium chloride can be converted in a relatively rapid and economically efficient manner to desirable salts of the epoxy alkyl compounds for carrying out the esterification, such as the nitrate, perchlorate, sulfate and sulfonate salts. The process is carried out by filling an ion exchange column with a strongly basic ion exchange resin, which has exchange sites of a quaternary ammonium character. The resin is used in hydroxyl form. The quaternary ammonium salt which is to be converted, such as 3-chloro-2-hydroxypropyl trimethyl ammonium chloride, is dissolved in water. The concentration can be a suitable amount such as 10 to 25 percent, 20 percent by weight being an appropriate concentration. The ion exchange procedure is suitably carried out at ambient room temperature. The aqueous solution is passed through the column at a rate permitting the chloride ions in the quaternary complex to be replaced by hydroxyl ions. The column is then flushed with water. The effluent containing epoxyalkyl quaternary ammonium hydroxide is treated with an acid with the desired anion, for example nitric, perchloric, sulfuric or sulfonic acid. To illustrate, the effluent can be treated with 70 percent nitric acid to lower the pH to about 5. The resulting quaternary ammonium nitrate con be isolated following conventional isolation procedures or the aqueous solution itself can be used as the reaction mixture for esterification of the carboxylate salt groups of the starting polymer to be used in the esterification reaction.

The water-soluble polymers of this invention are highly charged polyelectrolytes useful in solid-liquid separation processes, especially the very high molecular weight polymers, such as those derived from the carboxylate salt intermediate polymers having molecular weight of greater than 1 million, preferably having a molecular weight of at least 5 million. The copolymers of this invention are especially useful in the dewatering of sewage sludge. They are useful in the treatment of other industrial process sludges. They can be used effectively in other flocculation and filtration processes. The polymers of this invention are also useful as retention aids in paper manufacturing and for treatment of fibrous materials.

The following examples are illustrative of the invention. is not intended as limitations of the invention except IRA and Dow quat may be Registered Trade Marks in some countries.

### EXAMPLE 1

An ion exchange column having a 125 ml. capacity is filled with a strongly basic ion exchange resin sold by Rohm and Haas Company under the designation IRA 400 resin (hydroxide form). A commercial 3-chloro-2-hydroxypropyl trimethylammonium chloride sold by the Dow Chemical Company as Dow quat 188 is dissolved in water as a 20 percent solution. This 20 percent solution (1.07 molar) is passed through the column and the column is flushed with water. Immediately the pH of the effluent solution is lowered to 5.0 with 70 percent nitric acid. The resulting solution shows by titration to be 0.38 molar in glycidyl trimethylammonium nitrate. This solution requires no further purification for use in esterification of a carboxylate resin to the cationic water-soluble polymers of the invention.

Other desirable quaternary ammonium salts for use in the esterification reaction can be made by using the appropriate acid in lowering the pH of the effluent such as perchloric acid, sulfuric acid and sulfonic acid. Instead of starting with 3-chloro-2-hydroxypropyl trimethylammonium chloride, other corresponding quaternary ammonium chloride salts can be used to provide other appropriate epoxy alkyl trialkylammonium salts for esterification of carboxylate salt groups to B polymeric units.

### EXAMPLE 2

Into a 1000 ml. four-neck flask equipped with a thermometer, mechanical stirrer and pH probe is charged 385 g. of a 0.38 molar glycidyl trimethyl ammonium nitrate (GTAN) solution (.148 moles). To this solution is added 7.5 grams of a dry, high molecular weight (8-9 million) poly sodium acrylate homopolymer. This solution is stirred and heated to 80°C during which time pH is maintained at 5.75 to 6.25 with 10 percent nitric acid. Once the solution reaches 80°C, it is kept at this temperature for 6 hours. The pH is controlled at 5.75 to 6.25 throughout the reaction period.

The resulting solution is analyzed by FT-IR and shows the polymer product to have undergone 75 percent esterification of the acrylate salt groups.

### EXAMPLE 3

Into a 1000 ml. four-neck flask equipped with a thermometer, mechanical stirrer and pH probe, is charged 390 g. of a previously prepared 0.38 molar glycidyl trimethyl ammonium nitrate solution. To this solution is added 11 grams of a dry, high molecular weight (5-7 million) copolymer having 65 mol percent acrylamide and 35 mol percent sodium acrylate polymeric units. The copolymer used is water soluble. This solution is stirred and heated to 80°C during which time pH is maintained et 5.75 to 6.25 by addition of 10 percent nitric acid. The solution is maintained at 80°C for 6 hours. The pH is controlled at 5.75 to 6.25 throughout the reaction period.

The resulting solution is analyzed by FT-IR and shows 80 percent esterification of the acrylate salt groups of the lymer to form acryloxy-2-hydroxy-propyltrimethylammonium nitrate polymer units. The polymeric product is water-soluble.

### EXAMPLE 4

The respective polymer products are evaluated as flocculation aids for sewage sludge. Anaerobically digested sludge from the Syracuse Metro Waste Treatment Plant is used as the substrate.

To samples of this sludge having approximately 2.0 percent solids, are added appropriate polymer dosages (10-200 parts by weight per million parts of sludge). The sludge samples are mixed by transferring the polymer-sludge mixture from one cup to another sixteen times. The conditioned sludge is poured into a Buchner funnel fitted with a cloth filter. The filtrate column is noted at various time intervals. Normally, six polymer doses are examined for each polymer. The filtration rate (ml./min.) increases as polymer dosage is increased up to an optimum.

A water-soluble polymer made following the procedure of Example 3 derived from an acrylamide-sodium acrylate copolymer having a molecular weight of about 8 X 10⁶ is evaluated as a flocculating agent for sewage sludge. The polymer comprises 4.5 mol percent sodium carboxylate units, 25.5 mol percent acryloxy-2-hydroxypropyl-trimethylammonium nitrate units (represents 80 mol percent esterification of the original sodium carboxylate units) and 70 mol percent acrylamide units.

Starting with the same sodium acrylate acrylamide polymer following the procedure of Example 3 except glycidyl trimethylammonium chloride is used instead of glycidyl trimethylammonium nitrate, a water-soluble polymer is obtained having 14 mol percent of sodium acrylate units, 21 mol percent of acryloxy-2-hydroxypropyl-trimethylammonium chloride units (represents only about 60 mol percent esterification of the original sodium carboxylate units) and 70 mol percent acrylamide units. It is also evaluated in a comparative manner.

The following Table summarizes the results comparing the flocculating activities of the above quaternary nitrate salt lymer of this invention (80 mol percent esterification of sodium acrylate polymer units) with the quaternary chloride salt polymer made by the prior art process (60 mol percent esterification of the sodium acrylate polymeric units):

| Polymer Used | ml. Water Collected | Time Seconds | PPM Polymer |
|---|---|---|---|
| 1. Invention Nitrate Salt Polymer --(80% sodium acrylate esterified units*) | 140 | 50 | 120 |
| 2. Polymer Made (Chloride Salt) By Prior Art Process (60% sodium acrylate units esterified*) | 45 | 50 | 120 |

| | | | |
|---|---|---|---|
| *esterified polymeric units are acryloxy-2-hydroxy-propyltrimethylammonium salt units | | | |

## Claims

1. A cationic, water-soluble, carboxylate polymer comprising the following polymeric units randomly distributed in the polymer chain:
A- 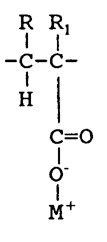 wherein R and R₁ are hydrogen, methyl or ethyl and M⁺ is a cation derived from a metal;
B- 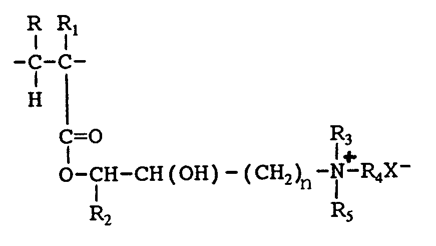 wherein R and R₁ are hydrogen, methyl or ethyl; R₃, R₄ and R₅ are alkyl groups having 1 to 8 carbon atoms, R₂ is selected from hydrogen and alkyl groups having 1 to 3 carbon atoms; "n" is an integer of 1 to 4; the total of "n" and the number of carbon atoms in R₂ not to exceed four; and X is an anion; the percentage of "B" units being from 50 to 90 mol percent, based on the total of "A" and "B" units, said polymer being obtainable by a process comprising esterification in aqueous medium at an elevated reaction temperature of a water-soluble carboxylate salt polymer having repeating units of the formula A and a molecular weight of 2000 to 20 million, with an epoxy alkyl ammonium salt of the following formula: 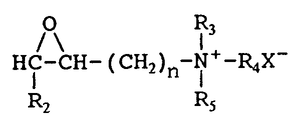 wherein X is an anion having a degradation rate against glycidyl trimethyl ammonium salt of up to 30, relative to water, measured in aqueous solution at 25°C and pH 6-7, with a 2 molar concentration of anion X and a 0.1 molar concentration of glycidyl trimethyl ammonium salt; and R₂, R₃, R₄, and R₅ have the meanings given above.

2. A polymer according to Claim 1 characterized in that R is hydrogen and R₁ is methyl.

3. A polymer according to Claim 1 or 2 characterized in that X is nitrate, sulfate, sulfonate or perchlorate.

4. A polymer according to Claim 2 characterized in that the polymeric unit B is an acryloxy-2-hydroxypropyltrimethyl ammonium salt.

5. A polymer according to Claim 2 characterized in that the polymeric unit B is an acryloxy-2-hydroxypropyltrimethyl ammonium nitrate and is present in the amount of at least 80 mol percent.

6. A polymer according to Claim 1 characterized in that the epoxy alkyl ammonium salt is a glycidyl trialkyl ammonium salt.

7. A polymer according to Claim 1 characterized in that R₃, R₄ and R₅ are all methyl.

8. A polymer according to Claim 1 characterized in that the amount of "B" units is 75 to 90 mol percent, based on total of "A" and "B" units.

9. A polymer according to any one of Claims 1 to 8 characterized in that it contains other polymeric groups than A and B in an amount which does not interfere with desired flocculation or filtration activity.

10. A polymer according to Claim 9 characterized in that the water-soluble carboxylate polymer is an acrylate polymer which has up to 95 mol percent of acrylamide units and 100-5 mol percent acrylate salt polymer units.

11. A process of removing solids from water by contacting a combination of water and solids with a flocculating effective amount of a polymer according to any one of Claims 1 to 10.

## Patentansprüche

1. Kationisches, wasserlösliches Carboxylatpolymer mit den folgenden, zufällig in der Polymerkette verteilten Polymereinheiten:
A- 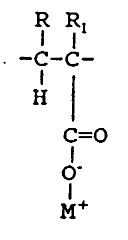 worin R und R₁ für Wasserstoff, Methyl oder Ethyl stehen und M⁺ ein von einem Metall abgeleitetes Kation bedeutet;
B- 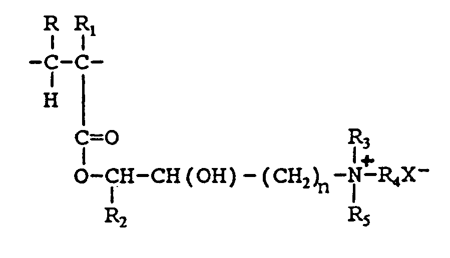 worin R und R₁ für Wasserstoff, Methyl oder Ethyl stehen,
R₃, R₄ und R₅ Alkylgruppen mit 1 bis 8 Kohlenstoffatomen bedeuten,
R₂ ausgewählt ist unter einem Wasserstoffatom und Alkylgruppen mit 1 bis 3 Kohlenstoffatomen,
"n" für eine ganze Zahl von 1 bis 4 steht,
die Summe von "n" und der Zahl der Kohlenstoffatome in R₂ die Zahl 4 nicht überschreitet und
X ein Anion bedeutet,
wobei der Prozentsatz der "B"-Einheiten 50 bis 90 Mol-%, basierend auf der Summe der "A" und "B"-Einheiten beträgt,
wobei dieses Polymer durch ein Verfahren erhältlich ist, bei dem ein wasserlösliches Carboxylatsalzpolymer mit den wiederkehrenden Einheiten der Formel A und einem Molekulargewicht von 2000 bis 20 Millionen in einem wässrigen Medium bei einer erhöhten Reaktionstemperatur mit einem Epoxyalkylammoniumsalz der folgenden Formel: 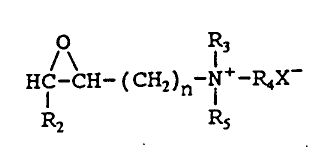 worin X ein Anion bedeutet, das gegenüber Glycidyltrimethylammoniumsalz eine Abbaugeschwindigkeit von bis zu 30, bezogen auf Wasser, gemessen in wässriger Lösung von 25°C und einem pH von 6 - 7, mit einer 2-molaren Konzentration des Anions X und einer 0,1-molaren Konzentration des Glycidyltrimethylammoniumsalzes, besitzt und
R₂, R₃, R₄ und R₅ die oben angegebenen Bedeutungen besitzen, verestert wird.

2. Polymer nach Anspruch 1,
dadurch **gekennzeichnet**,
daß R für Wasserstoff und R₁ für Methyl stehen.

3. Polymer nach Anspruch 1 oder 2,
dadurch **gekennzeichnet**,
daß X für Nitrat, Sulfat, Sulfonat oder Perchlorat steht.

4. Polymer nach Anspruch 2,
dadurch **gekennzeichnet**,
daß die Polymereinheit B ein Acryloxy-2-hydroxypropyltrimethylammoniumsalz ist.

5. Polymer nach Anspruch 2,
dadurch **gekennzeichnet**,
daß die Polymereinheit B ein Acryloxy-2-hydroxypropyltrimethylammoniumnitrat ist und in einer Menge von mindestens 80 Mol-% vorhanden ist.

6. Polymer nach Anspruch 1,
dadurch **gekennzeichnet**,
daß das Epoxyalkylammoniumsalz Glycidyltrialkylammoniumsalz ist.

7. Polymer nach Anspruch 1,
dadurch **gekennzeichnet**,
daß R₃, R₄ und R₅ alle für Methyl stehen.

8. Polymer nach Anspruch 1,
dadurch **gekennzeichnet**,
daß die Menge der "B"-Einheiten 75 - 90 Mol-%, bezogen auf die Summe der "A" und "B"-Einheiten beträgt.

9. Polymer nach einem der Ansprüche 1 bis 8,
dadurch **gekennzeichnet**,
daß es andere Polymergruppen als "A" und "B" in einer Menge enthält, bei der die gewünschte Ausflockungs- und Filtrationsaktivität nicht gestört wird.

10. Polymer nach Anspruch 9,
dadurch **gekennzeichnet**,
daß das wasserlösliche Carboxylatpolymer ein Acrylatpolymer ist, das bis zu 95 Mol-% Acrylamideinheiten und 100 - 5 Mol-% Acrylatsalzpolymereinheiten besitzt.

11. Verfahren zur Entfernung von Feststoffen aus Wasser durch in Kontakt bringen einer Kombination aus Wasser und Feststoffen mit einer zur Ausfällung wirksamen Menge eines Polymers nach einem der Ansprüche 1 bis 10.

## Revendications

1. Un polymère de carboxylate cationique, soluble dans l'eau, comprenant les motifs polymères suivants, distribués statistiquement dans la chaîne polymère:
A - 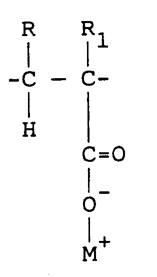 dans lequel:
R et R₁ représentent un atome d'hydrogène, un radical méthyle ou éthyle; et
M⁺ représente un cation dérivé d'un métal;
B - 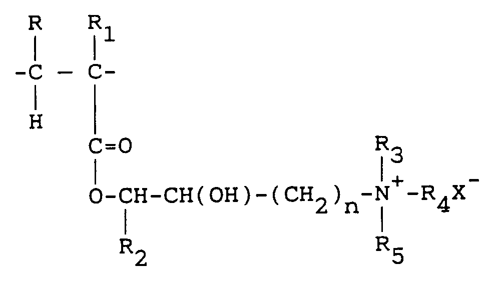 dans lequel:
R et R₁ représentent un atome d'hydrogène, un radical méthyle ou éthyle;
R₃, R₄ et R₅ sont des groupes alkyles renfermant de 1 à 8 atomes de carbone;
R₂ est choisi parmi un atome d'hydrogène et des groupes alkyles renfermant de 1 à 3 atomes de carbone;
"n" est un nombre entier de 1 à 4; le total de "n" et du nombre d'atomes de carbone dans R₂ ne dépassent pas 4; et
X représente un anion;
le pourcentage de motif "B" étant compris entre 50 et 90% en mole par rapport au total des motifs "A" et "B", ce polymère pouvant être obtenu par un procédé comprenant une estérification en milieu aqueux à une température de réaction élevée d'un polymère de sel de carboxylate soluble dans l'eau renfermant des motifs répétitifs de formule A et dont le poids moléculaire est compris entre 2 000 et 20 millions, avec un sel d'époxyalkylammonium répondant à la formule: 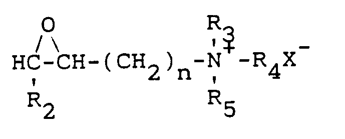 dans laquelle:
X est un anion présentant un taux de dégradation vis-à-vis du sel de glycidyltriméthylammonium atteignant jusqu'à 30, par rapport à l'eau, mesuré en solution aqueuse à 25°C et à pH 6-7, avec une concentration de 2 M en anion X⁻ et une concentration de 0,1 M en sel de glycidyltriméthylammonium; et
R₂, R₃, R₄ et R₅ ayant les significations indiquées ci-dessus.

2. Un polymère selon la revendication 1, caractérisé en ce que R est un hydrogène et R₁ est un méthyle.

3. Un polymère selon la revendication 1 ou 2, caractérisé en ce que X est un nitrate, sulfate, sulfonate ou perchlorate.

4. Un polymère selon la revendication 2, caractérisé en ce que le motif polymère B est un sel d'acryloxy-2-hydroxypropyltriméthylammonium.

5. Un polymère selon la revendication 2, caractérisé en ce que le motif polymère B est un nitrate d'acryloxy-2-hydroxypropyltriméthylammonium et il est présent en quantité d'au moins 80%.

6. Un polymère selon la revendication 1, caractérisé en ce que le sel d'époxyalkylammonium est un sel de glycidyltrialkylammonium.

7. Un polymère selon la revendication 1, caractérisé en ce que R₃, R₄ et R₅ sont tous des radicaux méthyles.

8. Un polymère selon la revendication 1, caractérisé en ce que la quantité de motifs "B" est comprise entre 75 et 90% en mole par rapport au total des motifs "A" et "B".

9. Un polymère selon l'une quelconque des revendications 1 à 8, caractérisé en ce qu'il contient d'autres groupes polymères que A et B en quantité qui n'interfère pas avec l'activité recherchée de floculation ou de filtration.

10. Un polymère selon la revendication 9, caractérisé en ce que le polymère carboxylate soluble dans l'eau est un polymère acrylate qui renferme jusqu'à 95% en mole de motifs acrylamide et de 100 à 5% en mole de motifs d'un polymère de sel d'acrylate.

11. Un procédé d'élimination de matières sèches dans l'eau par mise en contact d'un mélange d'eau et de matières sèches avec une quantité permettant une floculation efficace d'un polymère selon l'une quelconque des revendications 1 à 10.
